# FASCICULE DE BREVET EUROPEEN

(11) **EP 4 350 178 B1**
(45) Date de publication et mention de la délivrance du brevet: **02.12.2026**
(21) Numéro de dépôt: 23201718.6
(22) Date de dépôt: 04.10.2023
(51) Int. Cl.: F16J 15/00, B63B 21/50, F16J 15/3204, F16J 15/3236

(54) **DISPOSITIF JOINT TOURNANT D'UNE INSTALLATION D'EXPLOITATION D'ÉNERGIE, TYPE PLATEFORME OFFSHORE, ET INSTALLATION COMPORTANT UN TEL DISPOSITIF**
DREHGELENKANORDNUNG EINER OFFSHORE-PLATTFORM-ENERGIEANLAGE UND ANLAGE MIT EINER SOLCHEN VORRICHTUNG
ROTARY JOINT DEVICE OF AN ENERGY EXPLOITATION INSTALLATION, SUCH AS AN OFFSHORE PLATFORM, AND INSTALLATION COMPRISING SUCH A DEVICE

(30) Priorité: 05.10.2022 FR 2210182
(43) Date de publication de la demande: 10.04.2024
(73) Titulaire: ETI Group, 13420 Gémenos (FR)
(72) Inventeur: MENARDO, Philippe, 06310 Beaulieu-sur-Mer (FR); CAPON, Charles, 13090 AIX-EN-PROVENCE (FR); SAINT-MICHEL, Laurent, 13400 AUBAGNE (FR)
(74) Mandataire: Santarelli

(56) Documents cités:
- EP-A1- 3 460 296
- DE-A1- 102017 122 269
- DE-A1- 19 916 107
- US-A1- 2012 146 293

## Description

### Domaine technique de l'invention

L'invention concerne les installations d'exploitation d'énergie, notamment de fluides et par exemple d'hydrocarbures ou de gaz, ou d'électricité, sur des plateformes du type offshore, et notamment les dispositifs joint tournant utilisés dans de telles installations.

### Etat de la technique

Les dispositifs joint tournant installés dans des installations sous pression peuvent, entre autres, trouver une application dans les navires de production pétrolières du domaine de l'offshore, permettant l'exploitation de champs d'hydrocarbures en mer. Des unités flottantes de production, de stockage et de déchargement peuvent être formées par un navire qui est mobile, du fait de son environnement, autour d'une tourelle d'amarrage qui est géostationnaire. Le navire peut être assujetti temporairement à la tourelle. Les installations peuvent comporter des conduits qui forment un réseau de canalisations subaquatiques et qui permettent une communication fluidique pour un transfert de fluide entre le fond de la mer et le navire.

Pour assurer l'étanchéité entre le navire et la tourelle et ainsi assurer l'intégrité du transfert de fluide, les dispositifs joint tournant sont pourvus d'une première partie, dite fixe, assujettie à la tourelle et d'une deuxième partie, dite mobile, assujettie au navire. La deuxième partie des dispositifs joint tournant est donc mobile en rotation par rapport à la première partie des dispositifs joint tournant. Les dispositifs joint tournant sont en outre pourvus de plusieurs organes d'étanchéité dynamique, dits joints dynamiques, disposés dans des espaces ménagés entre la première partie fixe et la deuxième partie mobile des dispositifs joint tournant. De tels organes d'étanchéité dynamique peuvent comporter par exemple des lèvres ayant pour fonction d'assurer l'étanchéité face au fluide.

On connaît de la demande de brevet EP 3 460 296 un organe d'étanchéité dynamique, selon le préambule de la revendication 1, pourvu d'un talon, d'une première lèvre et d'une deuxième lèvre qui s'étendent chacune depuis le talon et en regard l'une de l'autre. L'organe d'étanchéité dynamique est en outre pourvu d'au moins une lèvre additionnelle située au niveau du talon à l'opposé des première et deuxième lèvres. Les première et deuxième lèvres sont configurées pour être énergisées par un premier fluide de sorte à étancher au moins l'une des première et deuxième parties, tandis que l'au moins une lèvre additionnelle est configurée pour être énergisée par un second fluide de sorte à étancher au moins l'autre des première pièce et deuxième pièce.

### Exposé de l'invention

L'invention concerne un dispositif joint tournant d'une installation d'exploitation d'énergie, notamment de fluides et par exemple d'hydrocarbures ou de gaz, ou d'électricité, notamment sur une plateforme offshore, qui soit particulièrement performant tout en étant simple, commode et économique.

L'invention a ainsi pour objet, sous un premier aspect, un dispositif joint tournant d'une installation d'exploitation d'énergie, notamment de fluides et par exemple d'hydrocarbures ou de gaz, ou d'électricité, notamment sur une plateforme offshore, comportant une première partie annulaire qui est assujettie à une tourelle d'amarrage fixe de ladite installation, une deuxième partie annulaire mobile en rotation autour d'un axe de rotation X et par rapport à ladite première partie annulaire fixe et qui est assujettie à un navire mobile de ladite installation, et au moins un organe d'étanchéité dynamique logé à l'intérieur d'un espace d'écartement situé entre ladite première partie annulaire fixe et ladite deuxième partie annulaire mobile et pourvu d'un talon et d'au moins une première lèvre qui s'étend en saillie depuis le talon.

Un tel dispositif joint tournant comporte donc une première partie annulaire, dite fixe, et une deuxième partie annulaire, dite mobile, et la deuxième partie annulaire est mobile en rotation autour d'un axe de rotation X et par rapport à ladite première partie annulaire fixe.

Un tel dispositif joint tournant comporte en outre au moins un organe d'étanchéité dynamique, lequel est logé à l'intérieur d'un espace d'écartement situé entre ladite première partie annulaire et ladite deuxième partie annulaire. L'au moins un organe d'étanchéité dynamique est notamment pourvu d'un talon et d'au moins une première lèvre qui s'étend en saillie depuis le talon.

De plus, la première partie annulaire fixe est assujettie à une tourelle d'amarrage fixe de l'installation d'exploitation d'énergie, et la deuxième partie annulaire mobile est assujettie à un navire mobile de ladite installation d'exploitation d'énergie.

Selon une caractéristique intéressante, l'organe d'étanchéité dynamique comporte deux parties, une première des deux parties de l'organe d'étanchéité dynamique comporte au moins une première partie de talon et la première lèvre qui s'étend en saillie depuis ladite première partie de talon, et une deuxième des deux parties de l'organe d'étanchéité dynamique comporte au moins une deuxième partie de talon.

Former l'organe d'étanchéité dynamique en deux parties, avec deux parties de talon distinctes, permet de limiter les phénomènes d'endommagement du talon, qui peuvent mener à une rupture du talon.

L'organe d'étanchéité dynamique est donc formé de deux parties distinctes l'une de l'autre.

Selon un exemple intéressant, la première partie du talon et la deuxième partie du talon sont symétriques.

Par exemple, la première partie de l'organe d'étanchéité dynamique et la deuxième partie de l'organe d'étanchéité dynamique sont symétriques.

Selon une caractéristique intéressante, l'organe d'étanchéité dynamique comporte au moins une patte de renfort.

Une telle patte peut également être désignée nervure, ou renfort.

La patte de renfort est configurée pour limiter des contraintes de cisaillement dans le talon.

Par exemple, la patte de renfort s'étend en saillie depuis une face externe du talon, à distance des bords de la face externe.

Par exemple, la patte de renfort s'étend sensiblement au milieu de la face externe.

Par exemple, la patte de renfort s'étend en saillie en regard d'au moins la première lèvre. Dans le cadre d'un organe d'étanchéité dynamique en deux parties, la patte de renfort comporte par exemple au moins une partie qui s'étend en saillie depuis la première partie du talon, à distance et en regard d'au moins la première lèvre.

Selon une caractéristique intéressante, la première lèvre de l'organe d'étanchéité dynamique comporte une racine par laquelle elle est raccordée au talon, et un bord libre opposé à la racine, le bord libre étant pourvu d'un bourrelet circonférentiel.

Circonférentiel désigne un bourrelet faisant le tour de l'organe d'étanchéité dynamique, i.e. longeant le bord libre de la première lèvre, étant rappelé qu'un tel organe d'étanchéité dynamique est généralement globalement annulaire dans un état libre.

Le bourrelet est par exemple formé sur une face de la première lèvre configurée pour être en appui sur une paroi d'un logement recevant au moins en partie l'organe d'étanchéité dynamique.

Par exemple, le bourrelet circonférentiel comporte une encoche radiale.

Radial désigne ici une encoche s'étendant depuis un centre de l'organe d'étanchéité dynamique.

L'encoche est donc par exemple orthogonale au bord libre de la première lèvre.

L'encoche radiale est par exemple configurée pour équilibrer une pression de fluide qui serait introduit dans le logement, de part et d'autre du bourrelet circonférentiel.

L'encoche permet ainsi un équilibre isostatique.

Un tel fluide sous pression est configuré pour activer l'organe d'étanchéité dynamique, par exemple pour initier l'étanchéité de départ. Il remplace par exemple un ressort couramment utilisé pour plaquer la première lèvre contre une paroi du logement dans lequel elle est insérée.

Selon une caractéristique intéressante, au moins une arête entre une face interne du talon, opposée à une face externe depuis laquelle s'étend au moins la première lèvre, et une surface latérale du talon en contact avec une paroi du logement dans lequel est inséré au moins en partie le talon, comporte au moins un chanfrein ou un arrondi.

Autrement dit, au moins une arête interne du talon est chanfreinée ou arrondie.

Ainsi, par exemple lorsque l'organe d'étanchéité dynamique est inséré, au moins partiellement, dans un logement, avec au moins la première lèvre vers un fond du logement, une arête du logement arrive sur une surface latérale, supérieure ou inférieure, du talon de l'organe d'étanchéité dynamique.

Grâce à la forme arrondie ou chanfreinée de l'arête interne du talon, un risque de formation d'un bourrelet, lorsque l'espace d'écartement situé entre ladite première partie annulaire fixe et ladite deuxième partie annulaire mobile se réduit, est limité voire évité, et un risque que le bourrelet se retrouve pincé, voire écrasé, entre la première partie annulaire fixe et la deuxième partie annulaire mobile, est également réduit, voire évité.

Le chanfrein ou l'arrondi est par exemple configuré pour que l'arête se situe au moins à une limite du chanfrein ou de l'arrondi, au niveau de la surface latérale, lorsque l'organe d'étanchéité dynamique est placé dans le logement, et que l'espace d'écartement est à son maximum.

Ainsi par exemple, l'arête est hors de contact avec la surface latérale du talon.

Il est donc possible de limiter, voire éviter, un risque de formation d'un bourrelet par une partie du talon lorsque l'espace d'écartement se réduit et/ou un risque que l'arête entaille l'organe d'étanchéité dynamique.

Par ailleurs, une surface du talon en contact avec la paroi du logement est alors réduite. Il est ainsi possible de maximiser une pression sur l'organe d'étanchéité dynamique et donc produire une meilleure étanchéité.

Les caractéristiques intéressantes décrites ci-dessus peuvent être considérées comme des aspects de l'invention originaux en soi, mais peuvent aussi être combinées, en tout ou parties.

Selon un exemple de réalisation, l'organe d'étanchéité dynamique comporte une deuxième lèvre.

Par exemple, la deuxième lèvre s'étend en saillie depuis la deuxième partie du talon. Par exemple, la deuxième lèvre s'étend en regard de la première lèvre.

Si l'organe d'étanchéité dynamique comporte une patte de renfort, celle-ci est par exemple disposée entre la première lèvre et la deuxième lèvre.

Par exemple, elle est disposée à égale distance de la première lèvre et de la deuxième lèvre.

Selon un exemple de réalisation, au moins l'une de la première partie annulaire fixe ou de la deuxième partie annulaire mobile comporte le logement dans lequel est reçu au moins partiellement l'organe d'étanchéité dynamique.

Le logement est par exemple une gorge creusée dans au moins l'une de la première partie annulaire fixe ou de la deuxième partie annulaire mobile, à partir d'une face de la première partie annulaire fixe ou de la deuxième partie annulaire mobile, entre lesquelles est défini l'espace d'écartement.

Par exemple, la face interne du talon est en contact avec une paroi du logement, i.e. en appui contre une paroi du logement.

Selon un exemple de réalisation, la face interne du talon est en contact avec la première partie annulaire fixe.

Par exemple, le logement est formé, au moins en partie, dans la deuxième partie annulaire mobile.

Selon un exemple de réalisation, une paroi du logement forme une portée sur laquelle vient en contact au moins une partie de la première lèvre, et notamment au moins le bourrelet circonférentiel.

Selon un exemple de réalisation, le logement est agencé de sorte que le talon est reçu dans une position globalement orthogonale à l'axe de rotation et la première lèvre s'étend globalement au droit du talon.

Selon un exemple de mise en œuvre, le dispositif joint tournant comporte au moins une chambre de transfert au moins partiellement ménagée dans ladite première partie annulaire fixe et/ou dans ladite deuxième partie annulaire mobile pour permettre un transfert de fluide au travers dudit dispositif joint tournant, avec l'espace d'écartement qui débouche dans ladite au moins une chambre de transfert, et avec l'organe d'étanchéité dynamique disposé à proximité de la chambre de transfert.

L'organe d'étanchéité dynamique, dans une telle disposition, assure une étanchéité de la chambre de transfert.

Selon un autre exemple de mise en œuvre, l'organe d'étanchéité dynamique peut être utilisé ailleurs dans le dispositif joint tournant.

Par exemple, il peut servir pour étancher un mécanisme de guidage des première et deuxième parties annulaires, lequel mécanisme est formé généralement par des organes à roulements. On dira qu'il s'agit d'un joint de roulement.

Il peut servir aussi comme joint environnemental, i.e. qu'il est situé au plus loin de la chambre de transfert, par exemple vers une extrémité de la première partie annulaire fixe et/ou de la deuxième partie annulaire mobile, à l'opposé de la chambre de transfert. L'invention a aussi pour objet, sous un autre aspect, une installation d'exploitation d'énergie, notamment de fluides et par exemple d'hydrocarbures ou de gaz, ou d'électricité, et notamment sur une plateforme offshore, comportant au moins un dispositif joint tournant tel que décrit ci-dessus.

Un telle installation d'exploitation d'électricité comporte par exemple un parc éolien.

Un fluide circulant dans le dispositif joint tournant comporte alors par exemple de l'eau, du gaz, de l'huile ou autre.

### Brève description des figures

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 représente schématiquement et partiellement une installation d'exploitation d'énergie, notamment de fluides et par exemple d'hydrocarbures ou de gaz, sur une plateforme offshore, pourvue d'un navire, d'une tourelle d'amarrage, d'un réseau de canalisations subaquatiques permettant une communication fluidique pour le transfert du fluide entre le fond de la mer et le navire, et d'un dispositif joint tournant assurant l'étanchéité entre le navire et la tourelle et l'intégrité du transfert de fluides.
La figure 2 est une vue de dessus du dispositif joint tournant de l'installation illustrée sur la figure 1.
La figure 3 est une vue partielle en coupe du dispositif joint tournant, repérée III-III sur la figure 2.
La figure 4 représente schématiquement une section d'un organe d'étanchéité dynamique selon un exemple de réalisation de l'invention.
La figure 5 représente schématiquement une section d'une première partie d'un organe d'étanchéité dynamique selon un exemple de réalisation de l'invention.
La figure 6 est une vue en perspective de la première partie d'un organe d'étanchéité dynamique de la figure 5.
La figure 7 représente une partie d'un dispositif selon un exemple de réalisation de l'invention comportant un organe d'étanchéité dynamique selon un exemple de réalisation de l'invention, disposé dans un logement du dispositif joint tournant, dans un état de repos.
La figure 8 représente la partie de dispositif de la figure 7 avec une pression appliquée dans le logement.

### Description détaillée

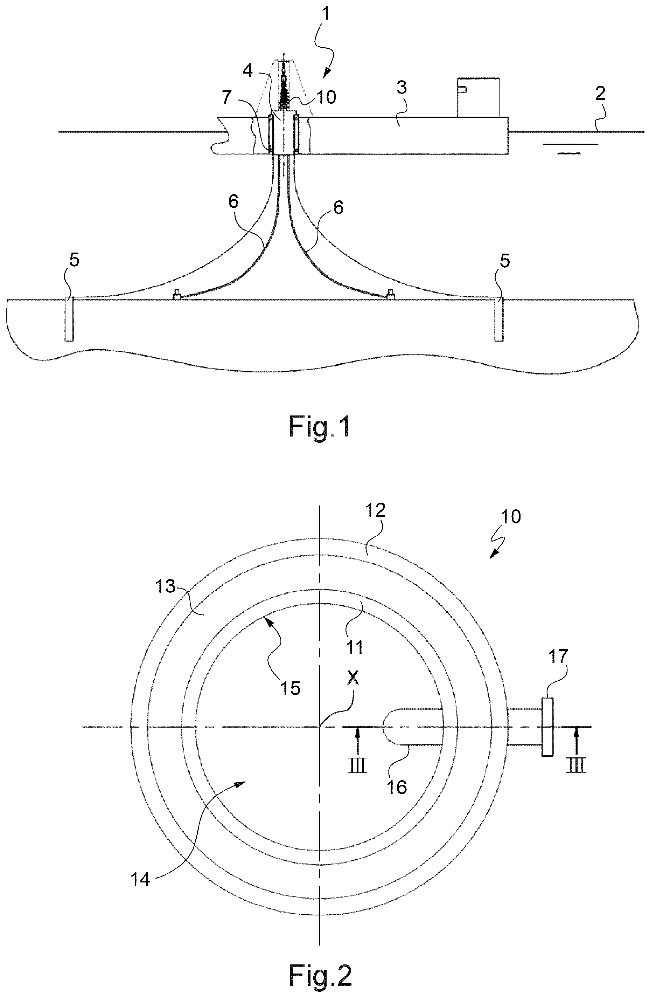

La figure 1 illustre une installation d'exploitation d'énergie 1, notamment de fluides et par exemple d'hydrocarbures ou de gaz, sur une plateforme offshore, permettant l'exploitation de champs d'hydrocarbures en mer 2.

Cette installation 1, aussi appelée unité flottante de production, de stockage et de déchargement, peut être pourvue d'un navire 3 qui est mobile, du fait de son environnement formé par la mer 2, et d'une tourelle d'amarrage 4 qui est géostationnaire et autour de laquelle le navire 3 est mobile.

La tourelle d'amarrage 4 peut par exemple être assujettie mécaniquement au fond de la mer 2 via des ancres sous-marines 5.

Le navire 3 peut être mobile vis-à-vis de la tourelle d'amarrage 4 par le biais d'un mécanisme à roulements 7.

L'installation 1 peut être pourvue de conduits 6 qui forment un réseau de canalisations subaquatiques permettant une communication fluidique pour le transfert du fluide entre un gisement sous-marin puis la tourelle d'amarrage 4, et le navire 3.

Le fluide circulant dans les conduits 6 provient du fond de la mer 2.

L'installation 1 comporte un dispositif joint tournant 10 assurant l'étanchéité entre le navire 3 et la tourelle d'amarrage 4 et l'intégrité du transfert de fluides.

Le dispositif joint tournant 10 peut être formé d'un joint tournant (« *swivel device* » en terminologie anglo-saxonne) ou d'un empilement de tels joints (« *swivel stack device* » en terminologie anglo-saxonne).

Ainsi qu'illustré sur la figure 2, un tel dispositif joint tournant 10 est globalement annulaire et comporte une première partie annulaire 11, dite fixe, qui est configurée pour être assujettie à la tourelle d'amarrage 4, ainsi qu'une deuxième partie annulaire 12, dite mobile, qui est configurée pour être assujettie au navire 3.

Dans l'exemple décrit, la deuxième partie annulaire 12 est mobile en rotation par rapport à la première partie annulaire 11, par l'intermédiaire d'un organe à roulements 13 au moins partiellement interposé entre les première et deuxième parties annulaires 11 et 12.

Le dispositif joint tournant 10 présente un espace interne 14 défini ici par une surface interne 15 de la première partie annulaire 11.

L'installation 1 comporte en outre un conduit de transfert 16 raccordé, directement ou indirectement, à au moins un des conduits subaquatiques 6.

Le conduit de transfert 16 entre dans le dispositif joint tournant 10 par son espace interne 14 et débouche à l'extérieur du dispositif joint tournant 10 par un raccord de sortie 17.

Le conduit de transfert 16 traverse ainsi le dispositif joint tournant 10 en entrant dans la première partie annulaire 11 et en sortant par la deuxième partie annulaire 12.

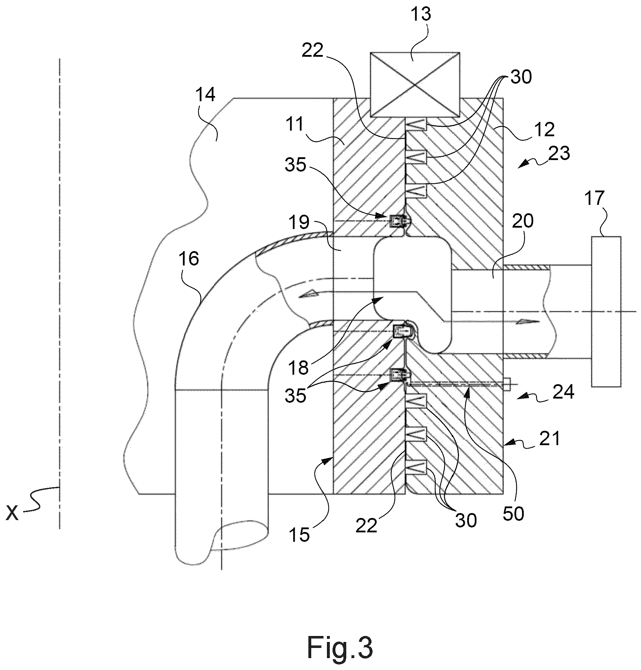

La figure 3 montre en coupe le dispositif joint tournant 10 de la figure 2 et illustre plus en détail le chemin fluidique au travers du dispositif joint tournant 10 et la coopération entre les première et deuxième parties annulaires 11 et 12.

Le dispositif joint tournant 10 est pourvu d'une chambre de transfert 18 formée partiellement par un premier orifice 19 ménagé dans la première partie annulaire 11 et par un deuxième orifice 20 ménagé dans la deuxième partie annulaire 12 et au moins partiellement en regard du premier orifice 19.

La chambre de transfert 18 est ici annulaire, ou toroïdale.

Le premier orifice 19 débouche au niveau de la surface interne 15 de la première partie annulaire 11 dans une première portion du conduit de transfert 16 située dans l'espace interne 14 du dispositif joint tournant 10 et qui est raccordée aux conduits subaquatiques 6.

Le deuxième orifice 20 débouche au niveau d'une surface externe 21 de la deuxième partie annulaire 12 dans une deuxième portion du conduit de transfert 16 située à l'extérieur du dispositif joint tournant 10 et qui comporte le raccord de sortie 17.

Une flèche illustrée sur la figure 3 montre le chemin fluidique emprunté par le fluide venant des conduits 6 et acheminé par le conduit de transfert 16 en traversant les première et deuxième parties annulaire 11 et 12 du dispositif joint tournant 10, jusqu'au raccord de sortie 17.

Le dispositif joint tournant 10 est en outre pourvu d'un espace d'écartement 22 situé entre la première partie annulaire 11 et la deuxième partie annulaire 12.

L'espace d'écartement 22 est prévu pour permettre la rotation de la deuxième partie annulaire 12 par rapport à la première partie annulaire 11.

Dans l'exemple décrit, l'espace d'écartement 22 est interrompu par la chambre de transfert 18.

Ainsi, sur une portion supérieure 23 du dispositif joint tournant 10, l'espace d'écartement 22 s'étend depuis l'organe à roulement 13 jusqu'à déboucher dans la chambre de transfert 18 ; tandis que sur une portion inférieure 24 du dispositif joint tournant 10, l'espace d'écartement 22 débouche à une extrémité dans la chambre de transfert 18 et débouche à une extrémité opposée à l'extérieur du dispositif joint tournant 10.

La chambre de transfert 18 est ici interposée entre les portions supérieure 23 et inférieure 24.

En particulier, l'espace d'écartement 22 est ménagé entre une surface externe de la première partie annulaire 11, laquelle surface externe est opposée à sa surface interne 15, et une surface interne de la deuxième partie annulaire 12, laquelle surface interne est opposée à sa surface externe 21.

Le dispositif joint tournant 10 comporte des organes d'étanchéité dynamique 30 logés au moins partiellement à l'intérieur de l'espace d'écartement 22, dans les portions supérieure et inférieure 23 et 24 du dispositif joint tournant 10.

Ces organes d'étanchéité dynamique 30 sont prévus pour étancher l'espace d'écartement 22.

Ces organes d'étanchéité dynamique 30 peuvent comporter par exemple des lèvres ayant pour fonction d'assurer l'étanchéité face au fluide.

Dans l'exemple décrit, trois organes d'étanchéité dynamique 30 sont logés au moins partiellement à l'intérieur de l'espace d'écartement 22 dans la portion supérieure 23 du dispositif joint tournant 10 et trois organes d'étanchéité dynamique 30 sont logés au moins partiellement à l'intérieur de l'espace d'écartement 22 dans la portion inférieure 24 du dispositif joint tournant 10.

Le dispositif joint tournant 10 comporte ici en outre plusieurs dispositifs de protection 35 des organes d'étanchéité dynamique 30.

En variante, il pourrait y en avoir plus ou moins et pas nécessairement le même nombre dans les portions supérieure et inférieure.

Dans l'exemple décrit, un dispositif de protection 35 est logé au moins partiellement à l'intérieur de l'espace d'écartement 22 dans la portion supérieure 23 du dispositif joint tournant 10 et deux dispositifs de protection 35 sont logés au moins partiellement à l'intérieur de l'espace d'écartement 22 dans la portion inférieure 24 du dispositif joint tournant 10.

Le dispositif joint tournant 10 peut aussi comporter un dispositif de nettoyage 50 configuré pour évacuer des débris que peut comporter ledit fluide et qui est ici formé par un canal formé dans la deuxième partie annulaire 12 et qui débouche dans l'espace d'écartement 22 au niveau d'un dispositif de protection 35.

En variante, il pourrait y avoir plus ou moins de dispositifs de protection et/ou de dispositif de nettoyage, ou ne pas y en avoir.

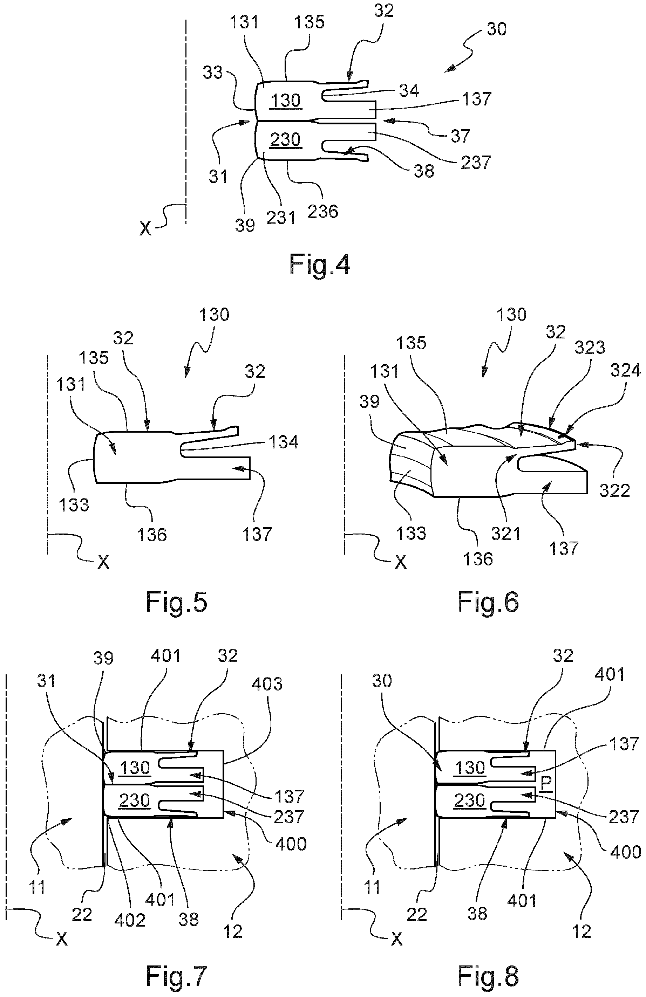

Les figures 4 à 8 illustrent un organe d'étanchéité dynamique 30 selon un exemple de réalisation de la présente invention.

Un organe d'étanchéité dynamique 30 est généralement globalement annulaire dans un état libre.

L'axe X représente donc ici un axe de révolution de l'organe d'étanchéité dynamique 30.

La figure 4 montre, en section, l'organe d'étanchéité dynamique 30.

Comme l'organe d'étanchéité dynamique 30 est globalement annulaire, la section représentée figure 4 correspond à une section prise selon un plan radial à l'axe X.

Dans l'exemple de réalisation présenté sur les figures 4 à 8, l'organe d'étanchéité dynamique 30 comporte un talon 31 et au moins une première lèvre 32 qui s'étend en saillie depuis le talon 30. Ici, il comporte en outre une deuxième lèvre 38 qui s'étend également en saillie du talon 30, en regard de la première lèvre 32.

Le talon 31 comporte une face interne 33, orientée vers l'axe X, et une face externe 34 d'où s'étendent les première et deuxième lèvres 32, 38.

De part et d'autre, le talon 31 comporte une surface latérale supérieure 135 et une surface latérale inférieure 236 reliant la face interne 33 à la face externe 34.

Selon une caractéristique intéressante, l'organe d'étanchéité dynamique 30 comporte ici une patte de renfort 37.

La patte de renfort 37 s'étend en saillie depuis la face externe 34 du talon 31, à distance des bords de la face externe 34, i.e. à distance des surfaces latérales supérieure 135 et inférieure 236, et même ici sensiblement au milieu de la face externe 34.

Ici, la patte de renfort 37 est agencée entre la première lèvre 32 et la deuxième lèvre 38, et à égale distance de la première lèvre 32 et de la deuxième lèvre 38.

Selon une autre caractéristique intéressante, le talon 31 présente au moins une arête située entre la face interne 33 du talon 31 et au moins une de la surface latérale supérieure 135, ou de la surface latérale inférieure 236, du talon 31, laquelle arête comporte au moins un chanfrein ou un arrondi 39.

Autrement dit, au moins une arête interne du talon 31, voire les deux arêtes internes, est (sont) chanfreinée(s) ou arrondie(s).

Selon une autre caractéristique intéressante, l'organe d'étanchéité dynamique 30 comporte ici deux parties 130, 230, désignées par commodité première partie 130 et deuxième partie 230.

L'organe d'étanchéité dynamique est donc ici formé de deux parties 130, 230 qui sont distinctes l'une de l'autre.

La première partie 130 et la deuxième partie 230 sont ici symétriques par rapport à un plan médian de l'organe d'étanchéité dynamique 30.

Un plan médian désigne ici un plan orthogonal à l'axe X, autrement dit dont l'axe X forme une normale.

Par conséquent, le talon 31 de l'organe d'étanchéité dynamique 30 comporte une première partie de talon 131 et une deuxième partie de talon 231.

Ainsi, dans l'exemple illustré, la première partie 130 comporte la première partie de talon 131 du talon 31, ainsi que la première lèvre 32 qui s'étend en saillie depuis ladite première partie de talon 131, et la deuxième partie 230 comporte la deuxième partie de talon 231 du talon 31, ainsi que la deuxième lèvre 38 qui s'étend en saillie depuis ladite deuxième partie de talon.

Ici, du fait de la structure en deux parties de l'organe d'étanchéité dynamique, la patte de renfort 37 comporte également deux parties 137, 237, la première partie 130 de l'organe d'étanchéité dynamique 30 comportant la première partie 137 de la patte de renfort 37 tandis que la deuxième partie 230 de l'organe d'étanchéité dynamique 30 comporte la deuxième partie 237 de la patte de renfort 37.

La figure 5 montre plus en détail, en section la première partie 130 de l'organe d'étanchéité dynamique 30.

La première partie de talon 131 comporte une face interne 133 qui est une première partie de la face interne 33 de l'organe d'étanchéité dynamique 30, une face externe 134, qui est une première partie de la face externe 34 de l'organe d'étanchéité dynamique 30, d'où s'étend la première lèvre 32, ainsi que la surface latérale supérieure 135 reliant d'un côté, dit supérieur, la face interne 133 et la face externe 134.

Entre la face interne 133 et la face externe 134, et opposée à la surface latérale supérieure 135, la première partie de talon 131 comporte une surface inférieure 136 configurée pour venir en appui contre la deuxième partie 230 de l'organe d'étanchéité dynamique 30. Comme l'illustre la figure 5, la première partie 137 de la patte de renfort 37 s'étend plus particulièrement depuis la face interne 134, dans un prolongement de la surface inférieure 136.

Au moins une partie de la patte 137 se distingue de la première lèvre 32 en ce qu'elle a une épaisseur, et donc une rigidité, supérieure.

Comme le montre mieux la figure 6, la première lèvre 32 de l'organe d'étanchéité dynamique 30 comporte une racine 321 par laquelle elle est raccordée au talon 31, et plus particulièrement ici à la première partie de talon 131, et un bord libre 322 opposé à la racine 321.

Le bord libre 322 est ici pourvu d'un bourrelet circonférentiel 323.

Circonférentiel indique que le bourrelet 323 fait le tour de l'organe d'étanchéité dynamique 30, ici en longeant le bord libre 323 de la première lèvre 32.

Le bourrelet 323 est ici formé sur une face de la première lèvre 32, en particulier du côté de sa face supérieure, i.e. sur la face située dans un prolongement de la surface latérale supérieure 135.

En outre, le bourrelet circonférentiel 323 comporte ici une encoche radiale 324.

Radial signifie que l'encoche s'étendant depuis un centre de l'organe d'étanchéité dynamique, i.e. selon un plan radial par rapport à l'axe X.

L'encoche 324 est donc ici orthogonale au bord libre 322 de la première lèvre 32. Comme le montre mieux la figure 6, dans le présent exemple de réalisation, la surface interne 133 de la première partie de talon 131 est aussi sensiblement chanfreinée ou arrondie en son arête formée entre la face interne 133 et la surface inférieure 136.

La deuxième partie 230 étant symétrique à la première partie 130, la description ci-dessus est identique pour la deuxième partie 230 et ne sera pas reprise en détail. Les références sont les mêmes additionnées de 100 et la description qui suit de l'agencement de l'organe d'étanchéité dynamique 30 dans un logement 400 fera référence à la première partie 130 et à la deuxième partie 230.

Dans l'exemple de réalisation des figures 7 et 8 la deuxième partie annulaire mobile 12 comporte un logement 400 dans lequel est reçu au moins partiellement l'organe d'étanchéité dynamique 30.

En variante, le logement pourrait être ménagé dans la première partie annulaire fixe. Le logement 400 comporte une paroi latérale 401 formant portée, et un fond 403.

Le logement est par exemple une gorge creusée, ici dans la deuxième partie annulaire mobile 12, à partir d'une face interne de la deuxième partie annulaire mobile qui définit, avec une face externe de la première partie annulaire fixe, l'espace d'écartement 22. Un bord d'intersection entre la paroi latérale 401 et la face interne de la deuxième partie annulaire mobile 12 forme ainsi une arête 402 du logement 400.

L'organe d'étanchéité dynamique 30 est reçu dans le logement 400 comme illustré figures 7 et 8.

La face interne 33 du talon 31 est ici en contact avec la première partie annulaire fixe 11. De plus ici, le logement 400 est agencé de sorte que le talon 31 est reçu dans une position globalement orthogonale à l'axe de rotation X et la première lèvre s'étend globalement au droit du talon.

La surface latérale supérieure 135 et la surface latérale inférieure 236 sont alors en appui contre la paroi 401 du logement 400.

La paroi latérale 401 du logement forme une portée sur laquelle vient en contact au moins une partie de la première lèvre 32 et de la deuxième lèvre 38, et notamment au moins le bourrelet circonférentiel 323, étant entendu que la deuxième lèvre 38 peut être identique, par symétrie, à la première lèvre 32 et peut donc également être pourvue d'un tel bourrelet, éventuellement muni d'une encoche également.

En fonctionnement du dispositif joint tournant, l'encoche radiale permet ainsi un passage de fluide qui serait introduit dans le logement 400, de part et d'autre du bourrelet circonférentiel 323.

Un tel fonctionnement est illustré sur la figure 8.

Le fluide sous pression P est configuré pour activer l'organe d'étanchéité dynamique 30, par exemple pour initier l'étanchéité de départ.

Grâce à l'encoche radiale, il n'y a pas nécessairement besoin d'un ressort complémentaire pour plaquer la première lèvre 32, ainsi que la deuxième lèvre 38, contre la paroi 401 du logement 400.

Ainsi, comme l'illustre la figure 8 par comparaison avec la figure 7, appliquer une telle pression tend à plaquer les première et deuxième lèvres 32, 38 contre la paroi 401 du logement 400, ainsi qu'à sensiblement écarter la première partie 137 et la deuxième partie 237 de la patte de renfort 37 l'une de l'autre.

Par ailleurs, lorsque l'organe d'étanchéité dynamique 30 est inséré, au moins partiellement, dans le logement 400, avec au moins la première lèvre 32 vers le fond 403 du logement 400, comme illustré figures 7 et 8, la surface latérale supérieure 135 et/ou la surface latérale inférieure 236 se trouve à proximité immédiate de l'arête 402 du logement 400.

Lorsque l'espace d'écartement 22 est à son maximum, le chanfrein ou l'arrondi 39 est de préférence configuré pour que l'arête 402 se situe au moins à une limite du chanfrein ou de l'arrondi 39, au niveau de la surface latérale supérieure 135 ou inférieure 236 du talon.

Ainsi par exemple, l'arête 402 est hors de contact avec la surface latérale supérieure 135 ou inférieure 236 du talon.

Par ailleurs, une surface du talon en contact avec la paroi du logement est alors réduite. Il est ainsi possible de maximiser une pression sur l'organe d'étanchéité dynamique et donc produire une meilleure étanchéité.

L'espace d'écartement 22 augmente avec la pression entre ladite première partie annulaire fixe 11 et ladite deuxième partie annulaire mobile 12, et l'espace d'écartement 22 réduit lorsque cette pression diminue entre la première partie annulaire fixe 11 et la deuxième partie annulaire mobile 12.

Lorsque l'espace d'écartement 22 augmente, la pression P dans le logement peut engendrer une formation d'un bourrelet à partir du talon de l'organe d'étanchéité dynamique, lequel pourrait se retrouver pincé lorsque l'espace d'écartement 22 se réduit. Dans le présent exemple de réalisation selon l'invention, grâce à l'arrondi ou chanfrein 39 de l'arête interne du talon 31, un risque de formation d'un bourrelet dans l'espace d'écartement 22 est limité voire évité, et par conséquent un risque que le bourrelet se retrouve pincé, voire écrasé, entre la première partie annulaire fixe 11 et la deuxième partie annulaire mobile 12, est également réduit, voire évité.

On notera aussi que grâce à la forme sensiblement chanfreinée ou arrondie de la surface interne 133 de la première partie de talon 131 en son arête formée entre la face interne 133 et la surface inférieure 136, respectivement de la surface interne de la deuxième partie de talon 231 en son arête formée entre la face interne et la surface inférieure, les risques d'accrochage entre les deux parties de l'organe d'étanchéité dynamique 30 lorsqu'elles sont insérées dans le logement 400 sont réduits.

Le logement 400 incluant un organe d'étanchéité dynamique 30 comportant tout ou partie des caractéristiques décrites ci-dessus peut être situé dans le dispositif joint tournant tel qu'illustré figure 3 à proximité de la chambre de transfert 18.

L'organe d'étanchéité dynamique 30, dans une telle disposition, assure une étanchéité de la chambre de transfert.

Selon un autre exemple de mise en œuvre, l'organe d'étanchéité dynamique peut être utilisé ailleurs dans le dispositif joint tournant.

Par exemple, il peut servir pour étancher un mécanisme de guidage des première et deuxième parties annulaires, lequel mécanisme est formé généralement par des organes à roulements. On dira qu'il s'agit d'un joint de roulement.

Il peut servir aussi comme joint environnemental, i.e. qu'il est situé au plus loin de la chambre de transfert, par exemple vers une extrémité de la première partie annulaire fixe et/ou de la deuxième partie annulaire mobile, à l'opposé de la chambre de transfert.

## Revendications

1. Dispositif joint tournant (10) d'une installation d'exploitation d'énergie, notamment sur une plateforme offshore, comportant une première partie annulaire (11) qui est assujettie à une tourelle d'amarrage fixe de ladite installation, une deuxième partie annulaire mobile (12) en rotation autour d'un axe de rotation (X) et par rapport à ladite première partie annulaire fixe (11) et qui est assujettie à un navire mobile de ladite installation, et au moins un organe d'étanchéité dynamique (30) logé à l'intérieur d'un espace d'écartement (22) situé entre ladite première partie annulaire fixe (11) et ladite deuxième partie annulaire mobile (12) et pourvu d'un talon (31) et d'au moins une première lèvre (32) qui s'étend en saillie depuis le talon (31),
ledit organe d'étanchéité dynamique (30) comportant deux parties (130, 230), une première (130) des deux parties de l'organe d'étanchéité dynamique (30) comportant au moins une première partie de talon (131) du talon (31) et la première lèvre (32) qui s'étend en saillie depuis ladite première partie de talon (131), et une deuxième (230) des deux parties de l'organe d'étanchéité dynamique (30) comportant au moins une deuxième partie de talon (231) du talon (31),
caractérisé et en ce que l'organe d'étanchéité dynamique (30) comporte au moins une patte de renfort (37), la patte de renfort (37) s'étendant en saillie depuis une face externe (34) du talon (31), à distance et en regard d'au moins la première lèvre (32).

2. Dispositif joint tournant (10) selon la revendication 1, **caractérisé en ce que** la première lèvre (32) de l'organe d'étanchéité dynamique (30) comporte une racine (321) par laquelle elle est raccordée à la première partie de talon (131), et un bord libre (322) opposé à la racine (321), le bord libre (322) étant pourvu d'un bourrelet (323) circonférentiel qui comporte une encoche radiale (324).

3. Dispositif joint tournant (10) selon l'une quelconque des revendications 1 ou 2, **caractérisé en ce que** l'organe d'étanchéité dynamique (30) comporte une deuxième lèvre (38), **en ce que** la deuxième lèvre (38) s'étend en saillie depuis la deuxième partie de talon, et **en ce que** la deuxième lèvre (38) s'étend en regard de la première lèvre (32).

4. Dispositif joint tournant (10) selon l'une quelconque des revendications 1 à 3, **caractérisé en ce qu'**au moins l'une de la première partie annulaire fixe (11) ou de la deuxième partie annulaire mobile (12) comporte un logement (400) dans lequel est reçu au moins partiellement l'organe d'étanchéité dynamique (30).

5. Dispositif joint tournant (10) selon la revendication 4, **caractérisé en ce que** au moins une arête entre une face interne (33) du talon (31), opposée à une face externe (34) depuis laquelle s'étend au moins la première lèvre (32), et une surface latérale du talon (135, 236) en contact avec une paroi (401) du logement (400) dans lequel est inséré au moins en partie le talon (31), comporte au moins un chanfrein ou un arrondi (39).

6. Dispositif joint tournant (10) selon la revendication 5, **caractérisé en ce que** la face interne (33) du talon (31) est en contact avec la première partie annulaire fixe (11).

7. Dispositif joint tournant (10) selon l'une quelconque des revendications 5 ou 6, **caractérisé en ce que** la paroi (401) du logement (400) forme une portée sur laquelle vient en contact au moins une partie de la première lèvre (32).

8. Dispositif joint tournant (10) selon l'une quelconque des revendications 4 à 7, **caractérisé en ce que** le logement (400) est agencé de sorte que le talon (31) est reçu dans une position orthogonale à l'axe de rotation (X) et la première lèvre (32) s'étend au droit du talon (31).

9. Dispositif joint tournant (10) selon l'une quelconque des revendications 1 à 8, **caractérisé en ce qu'**il comporte au moins une chambre de transfert (18) au moins partiellement ménagée dans ladite première partie annulaire fixe (11) et/ou dans ladite deuxième partie annulaire mobile (12) pour permettre un transfert de fluide au travers dudit dispositif joint tournant (10), avec l'espace d'écartement (22) qui débouche dans ladite au moins une chambre de transfert (18), et avec l'organe d'étanchéité dynamique (30) disposé à proximité de la chambre de transfert (18).

10. Installation (1) d'exploitation d'énergie, notamment de fluides et par exemple un hydrocarbure ou un gaz ou de l'électricité, et notamment sur une plateforme offshore, comportant un dispositif joint tournant (10) selon l'une quelconque des revendications 1 à 9.

## Patentansprüche

1. Drehgelenkvorrichtung (10) einer Anlage zur Energienutzung, insbesondere auf einer Offshore-Plattform, umfassend ein erstes ringförmiges Teil (11), das fest mit einem festen Verankerungsturm der Anlage verbunden ist, ein zweites bewegliches ringförmiges Teil (12), das sich um eine Drehachse (X) und in Bezug auf das erste feststehende ringförmige Teil (11) dreht und fest mit einem beweglichen Schiff der Anlage verbunden ist, und mindestens ein dynamisches Dichtelement (30), das in einem Abstandsraum (22) zwischen dem ersten feststehenden ringförmigen Teil (11) und dem zweiten beweglichen ringförmigen Teil (12) untergebracht ist und mit einem Absatz (31) und mindestens einer ersten Lippe (32) versehen ist, die sich aus dem Absatz (31) heraus erstreckt, wobei das dynamische Dichtelement (30) zwei Teile (130, 230) umfasst, wobei ein erstes (130) der beiden Teile des dynamischen Dichtelements (30) mindestens einen ersten Absatzteil (131) des Absatzes (31) und die erste Lippe (32) umfasst, die sich aus dem ersten Absatzteil (131) heraus erstreckt, und ein zweiter (230) der beiden Teile des dynamischen Dichtelements (30) mindestens einen zweiten Absatzteil (231) des Absatzes (31) umfasst, **dadurch gekennzeichnet, dass** das dynamische Dichtelement (30) mindestens eine Verstärkungslasche (37) umfasst, wobei sich die Verstärkungslasche (37) von einer Außenseite (34) des Absatzes (31) in einem Abstand und gegenüber der mindestens ersten Lippe (32) heraus erstreckt.

2. Drehgelenkvorrichtung (10) nach Anspruch 1, **dadurch gekennzeichnet, dass** die erste Lippe (32) des dynamischen Dichtelements (30) einen Ansatz (321), über den sie mit dem ersten Absatzteil (131) verbunden ist, und einen freien Rand (322) gegenüber des Ansatzes (321) umfasst, wobei der freie Rand (322) mit einem umlaufenden Wulst (323) versehen ist, der eine radiale Kerbe (324) umfasst.

3. Drehgelenkvorrichtung (10) nach einem der Ansprüche 1 oder 2, **dadurch gekennzeichnet, dass** das dynamische Dichtelement (30) eine zweite Lippe (38) umfasst, dass sich die zweite Lippe (38) aus dem zweiten Absatzteil heraus erstreckt und dass die zweite Lippe (38) sich gegenüber der ersten Lippe (32) erstreckt.

4. Drehgelenkvorrichtung (10) nach einem der Ansprüche 1 bis 3, **dadurch gekennzeichnet, dass** mindestens eines des ersten feststehenden ringförmigen Teils (11) oder des zweiten beweglichen ringförmigen Teils (12) eine Aufnahme (400) umfasst, in der das dynamische Dichtelement (30) mindestens teilweise aufgenommen wird.

5. Drehgelenkvorrichtung (10) nach Anspruch 4, **dadurch gekennzeichnet, dass** mindestens eine Kante zwischen einer Innenseite (33) des Absatzes (31), die einer Außenseite (34) gegenübersteht, von der sich mindestens die erste Lippe (32) erstreckt, und einer seitlichen Oberfläche des Absatzes (135, 236), die in Kontakt mit einer Wand (401) der Aufnahme (400) steht, in der mindestens teilweise der Absatz (31) eingesetzt ist, mindestens eine Fase oder eine Abrundung (39) umfasst.

6. Drehgelenkvorrichtung (10) nach Anspruch 5, **dadurch gekennzeichnet, dass** die Innenseite (33) des Absatzes (31) mit dem ersten feststehenden ringförmigen Teil (11) in Kontakt steht.

7. Drehgelenkvorrichtung (10) nach einem der Ansprüche 5 oder 6, **dadurch gekennzeichnet, dass** die Wand (401) der Aufnahme (400) eine Auflagefläche bildet, auf der mindestens ein Teil der ersten Lippe (32) zum Aufliegen kommt.

8. Drehgelenkvorrichtung (10) nach einem der Ansprüche 4 bis 7, **dadurch gekennzeichnet, dass** die Aufnahme (400) so angeordnet ist, dass der Absatz (31) in einer zu der Drehachse (X) orthogonal verlaufenden Position aufgenommen wird und sich die erste Lippe (32) auf Höhe des Absatzes (31) erstreckt.

9. Drehgelenkvorrichtung (10) nach einem der Ansprüche 1 bis 8, **dadurch gekennzeichnet, dass** sie mindestens eine Transferkammer (18) umfasst, die mindestens teilweise in dem ersten feststehenden ringförmigen Teil (11) und/oder in dem zweiten beweglichen ringförmigen Teil (12) ausgebildet ist, um einen Fluidtransfer durch die Drehgelenkvorrichtung (10) mit dem mindestens einen Abstandsraum (22), der in die mindestens eine Transferkammer (18) mündet, und mit dem dynamischen Dichtelement (30), das in der Nähe der Transferkammer (18) angeordnet ist, zu ermöglichen.

10. Anlage (1) zur Energienutzung, insbesondere aus Fluiden, wie beispielsweise einem Kohlenwasserstoff oder einem Gas, oder aus Elektrizität, insbesondere auf einer Offshore-Plattform, umfassend eine Drehgelenkvorrichtung (10) nach einem der Ansprüche 1 bis 9.

## Claims

1. Swivel joint device (10) of an installation for exploiting energy, in particular on an offshore platform, comprising a first annular part (11) that is secured to a fixed mooring turret of said installation, a second movable annular part (12) rotatably movable about an axis of rotation (X) and in relation to said first fixed annular part (11) and that is secured to a movable vessel of said installation, and at least one dynamic sealing member (30) housed inside a gap space (22) located between said first fixed annular part (11) and said second movable annular part (12) and provided with a body portion (31) and with at least one first lip (32) that projects from the body portion (31),
said dynamic sealing member (30) comprising two parts (130, 230), a first (130) of the two parts of the dynamic sealing member (30) comprising at least one first body portion part (131) of the body portion (31) and the first lip (32) that projects from said first body portion part (131), and a second (230) of the two parts of the dynamic sealing member (30) comprising at least one second body portion part (231) of the body portion (31),
**characterised in that** the dynamic sealing member (30) comprises at least one reinforcing lug (37), the reinforcing lug (37) projecting from an outer face (34) of the body portion (31), at a distance from and facing at least the first lip (32).

2. Swivel joint device (10) according to claim 1, **characterised in that** the first lip (32) of the dynamic sealing member (30) comprises a root (321) whereby it is connected to the first body portion part (131), and a free edge (322) opposite the root (321), the free edge (322) being provided with a circumferential bead (323) that comprises a radial notch (324).

3. Swivel joint device (10) according to either one of claims 1 or 2, **characterised in that** the dynamic sealing member (30) comprises a second lip (38), **in that** the second lip (38) projects from the second body portion part, and **in that** the second lip (38) extends facing the first lip (32).

4. Swivel joint device (10) according to any one of claims 1 to 3, **characterised in that** at least one of the first fixed annular part (11) or of the second movable annular part (12) comprises a housing (400) wherein the dynamic sealing member (30) is at least partially received.

5. Swivel joint device (10) according to claim 4, **characterised in that** at least one edge between an inner face (33) of the body portion (31), opposite an outer face (34) from which at least the first lip (32) extends, and a lateral surface of the body portion (135, 236) in contact with a wall (401) of the housing (400) wherein at least partly the body portion (31) is inserted, comprises at least one bevel or one rounded edge (39).

6. Swivel joint device (10) according to claim 5, **characterised in that** the inner face (33) of the body portion (31) is in contact with the first fixed annular part (11).

7. Swivel joint device (10) according to either one of claims 5 or 6, **characterised in that** the wall (401) of the housing (400) forms a bearing on which at least one part of the first lip (32) comes into contact.

8. Swivel joint device (10) according to any one of claims 4 to 7, **characterised in that** the housing (400) is arranged so that the body portion (31) is received in a position orthogonal to the axis of rotation (X) and the first lip (32) extends in line with the body portion (31).

9. Swivel joint device (10) according to any one of claims 1 to 8, **characterised in that** it comprises at least one transfer chamber (18) at least partially arranged in said first fixed annular part (11) and/or in said second movable annular part (12) to make it possible to transfer fluid through said swivel joint device (10), with the gap space (22) that opens into said at least one transfer chamber (18), and with the dynamic sealing member (30) disposed in the vicinity of the transfer chamber (18).

10. Installation (1) for exploiting energy, in particular fluids and for example a hydrocarbon or a gas or electricity, and in particular on an offshore platform, comprising a swivel joint device (10) according to any one of claims 1 to 9.
